# EUROPEAN PATENT APPLICATION

(11) **EP 1 702 679 A1**
(43) Date of publication of application: **20.09.2006**
(21) Application number: 04771012.4
(22) Date of filing: 29.07.2004
(51) Int. Cl.: B01J 20/12, B01J 2/28, C02F 1/28

(54) **PROCESS FOR PRODUCING REMOVER AND REMOVER**

(30) Priority: 07.11.2003 JP 2003378637
(71) Applicant: Kurita Water Industries Ltd., Shinjuku-ku, Tokyo 160-8383 (JP)
(72) Inventor: KAWAKATSU, Takahiro, Kurita Water Industries Ltd., Shinjuku-ku, Tokyo 1608383 (JP)
(74) Representative: Albrecht, Thomas
(86) International application number: PCT/JP2004/010797
(87) International publication number: WO 2005/044443

(57) **Abstract**

A powdery or slurry removing agent is solidified into grains having excellent handling property with maintaining its removing capability. A removing agent, a high polymer compound, and two or more kinds of solvents are mixed and a mixture thus obtained is dried. When the high polymer compound has high solubility relative to one of the solvents and has low solubility relative to the other solvent, the high polymer compound is concentrated to a side of the good solvent for the high polymer compound and is thus subjected to phase separation according to the evaporation of the solvents during drying process and the high polymer compound then functions as a binder for combining the removing agent. Pores are formed at portions where the poor solvent for high polymer compound existed, thereby making a formed solid matter porous. As a result, it is possible to solidifying a removing agent into grains having larger grain diameter without severely deteriorating the removing capability.

## Description

### TECHNICAL FIELD

The present invention relates to a method of producing a granular remover from a powdery or slurry removing agent which is used for removing boron, phosphorous, metallic components, and organic materials contained in purified water, wastewater, seawater, and the like, wherein the granular remover still maintains the removing capability of the removing agent and has excellent handling property, and relates to a remover produced by this method.

### BACKGROUND ART

Powdery absorbing agents of a type removing target materials by physical absorption have an advantage that the smaller the size (particle diameter) is, the larger the surface area per particle of the absorbing agent is and, therefore, the larger the absorptive capacity per unit weight is. On the other hand, however, such an absorbing agent having small particle diameter has disadvantages that, for example, the sedimentation of the absorbing agent during solid-liquid separation into the absorbing agent and the treated water after the absorption by adding the absorbing agent to water to be treated is poor and that the clarity is poor when the absorbing agent is used to fill a column and water to be treated is flowed into the column.

These disadvantages of the powdery absorbing agent are overcome by increasing the particle diameter at the expense of surface area, that is, absorptive efficiency. For example, as for phosphate absorbents, a method of solidifying an absorbing agent with cement has been proposed in JP 2000-157968A. However, this method has a problem that the pH of treated water is increased due to elution of calcium oxide from a solid absorbent obtained by this method. In JP 2002-292372A, a method of preventing the elution by means of carbonation treatment has been proposed. However, this method requires a lot of steps for solidifying and requires the carbonation treatment again when operation for regeneration using such as acid is conducted.

As described in "Dam engineering" No. 147, pp 30-38 (1998), there is a solidifying method by clay. This method requires firing process and a product by this method has poor porosity so as to have reduced effective surface area. Therefore, an absorbent obtained by this method has significantly reduced absorptive capacity per unit weight.

In case of an absorbing agent which is provided in slurry form because dry form is not suitable from viewpoints of absorptive capability and production cost, the solidification of such slurry absorbing agent is more difficult than the granulation of powdery absorbing agents. "Dam engineering" No. 147, pp 30-38 (1998) describes a method of solidifying a slurry absorbing agent by adding water-absorbing polymer to the slurry absorbing agent to gel the absorbing agent and then adding cement to the gelled absorbing agent. However, since the water-absorbing polymer has a nature of absorbing water, the volume of the absorbent is increased so that the absorptive capacity per unit device volume or unit absorbent volume is significantly reduced.

Also for powdery and slurry chemical absorbing agents which absorb target materials to be absorbed by chemical reaction, the handling property is improved by granulation or solidification similar to absorbing agents by physical absorption. For the chemical absorbing agent, the granulation or solidification further provides an effect of controlling the reactivity. For example, a calcium type defluorinating agent which removes fluoride by a reaction with calcium can be controlled its reactivity by the granulation or solidification.

It is difficult to solidify a powdery and slurry absorbing agent into a granular absorbent having excellent handling property without deteriorating its absorptive capability. Therefore, it is desired to improve this solidifying technology.

### DISCLOSURE OF THE INVENTION

It is an object of the present invention to provide a method of producing a remover by solidifying a powdery or slurry removing agent into a granular remover having excellent handling property without deteriorating its removing capability, and to provide a remover produced by this method.

According to the present invention, a remover is produced by mixing a removing agent, a high polymer compound, and two or more kinds of solvents, and drying thus obtained mixture.

### BRIEF DESCRIPTION OF THE DRAWINGS

Fig. 1 is a graph showing changes with time in defluorinating amount per unit weight of a solidified granular absorbent and a powdery absorbing agent, in Example 1.
Fig. 2 is a graph showing changes with time in fluoride concentration in water treated by sequential defluorinating treatment using the solidified granular absorbent in Example 1 and changes with time in amount of the treated water.

### DETAILED DESCRIPTION OF THE PREFERED EMBODIMENTS

As a result that inventors of this invention have earnestly studied aiming at developing a method solidifying a powdery or slurry removing agent into grains having larger grain diameter, they found that, by mixing a removing agent, a high polymer compound, and two or more kinds of solvents and drying thus obtained mixture, a porous solidified remover having excellent removing capability and handling property can be obtained.

In the present invention, the high polymer compound functions as a binder and it is important to mix the high polymer compound with two or more kinds of solvents. That is, when the high polymer compound has high solubility relative to one of the solvents and has low solubility relative to the other solvent, the high polymer compound is concentrated to a side of the good solvent for the high polymer compound and is thus subjected to phase separation according to the evaporation of the solvents during drying process and the high polymer compound functions as a binder for combining the removing agent after evaporation of the good solvent. On the other hand, pores are formed at portions where the poor solvent for high polymer compound existed because the poor solvent evaporates, thereby making a formed solid product porous. As a result, it is possible to solidifying a removing agent into grains having larger grain diameter without severely deteriorating the removing capability. On the other hand, when only one kind of solvent is used, the solidification is achieved while an obtained solid product can not have pores and thus reduced effective surface area so that the removing capability is severely deteriorated.

In the present invention, the removing agent and the remover may be a removing agent and a remover to which substances to be removed are physically absorbed (hereinafter, "physical absorbing agent" or "physical absorbent") or a removing agent and a remover to which substances to be removed are absorbed by chemical reaction with substance (s) contained in the removing agent or the remover (hereinafter, "chemical absorbing agent" or "chemical absorbent").

Alternatively, the removing agent and the remover may be a removing agent and a remover which removes substances to be removed by deposition of the substances into the removing agent or the remover.

In the present invention, the high polymer compound may be one or more selected from a group consisting of cellulosic high polymer compounds, polysulfones, polyacrylonitriles, and polyamides. The two or more kinds of solvents preferably include a poor solvent and a good solvent for the selected high polymer compound. At least one of the solvents is preferably selected from a group consisting of ketones, amides, alcohols, and saturated hydrocarbons and, more concretely, is preferably selected from a group consisting of acetone, formamide, dimethylformamide, dimethylacetamide, methanol, ethanol, isopropyl alcohol, hexane, and cyclohexane.

The percentage of the good solvent relative to the total of the solvents is preferably 50-90% by weight. The percentage of the high polymer compound relative to the total of the solvents is preferably 1-20% by weight. The ratio of the weight A of the removing agent to the total weight B of the high polymer compound and the solvents, i.e. ratio A/B, is preferably 0.5-2.

A physical absorbent and a chemical absorbent according to an embodiment of the present invention are excellent in absorptive capability and handling property. A chemical absorbent according to another embodiment of the present invention has such a feature that its absorptive capability, that is, reactivity is controllable.

The removing agent of the present invention as a subj ect to be solidified is not limited to powdery removing agent and may be slurry removing agent. That is, any slurry removing agent may be employed when water is soluble in at least one of used solvents and the amount of the solvent is enough for absorbing water contained in the slurry removing agent because, under this condition, a high polymer compound functions as a binder for combining the removing agent so as to produce a solid porous remover similarly to a case of using a powdery removing agent.

Though the present invention will be described with reference to a method producing a porous solid remover from a powdery removing agent as an embodiment, the present invention is not limited to a powdery removing agent and is effective in producing a porous solid remover from a slurry removing agent as mentioned above.

In this embodiment, a removing agent, a high polymer compound, and two or more kinds of solvents which are preferably a good solvent and a poor solvent for the high polymer compound are mixed and a mixture thus obtained is dried. For mixing this removing agent, the high polymer compound, and the solvents, it is preferable to prepare a solution (hereinafter, referred to as "high-polymer-doped solution") in which the two or more kinds of solvents and the high polymer compound are mixed and to add and mix the removing agent into the high-polymer-doped solution.

In preparing the high-polymer-doped solution, the high polymer compound may be added to a solvent mixture which is previously prepared by mixing the two or more kinds of solvents. To increase the solubility of the high polymer compound, the high polymer compound may be previously added to and dissolved with the good solvent for the high polymer compound and, after that, the poor solvent may be mixed. In this case, since the viscosity of solution is increased as the high polymer compound is dissolved with the solvent, heating the solvent to dissolve the high polymer compound if needed is also effective on increase in solubility of the high polymer compound.

In order to obtain a high-polymer-doped solution in which the high polymer compound is uniformly dissolved and to ensure porosity of the obtained remover, the percentage of the good solvent relative to the total of the solvents is preferably 50-90% by weight. The adding amount of the high polymer compound relative to the total of the solvents is preferably 1-20% by weight. The percentage of the good solvent and the adding amount of the high polymer compound depend on the solubility of the used high polymer compound relative to the good solvent, required porosity of the remover, and other conditions and should be suitably adjusted.

Then, the powdery removing agent is added to and mixed with the high-polymer-doped solution. When the adding amount of the removing agent to the high-polymer-doped solution is too much, mixing is difficult and solidification by the high polymer compound will be insufficient. To the contrary, when the adding amount of the removing agent is little and the amount of the high-polymer-doped solution is too much, it requires much time to dry and the content of the removing agent in the obtained remover will be low, so it is not preferable. Therefore, the ratio by weight of the powdery removing agent to the high-polymer-doped solution depends on the content of the high polymer compound in the high-polymer-doped solution and is preferably 0.5-2 of the high-polymer-doped solution relative to 1 of the removing agent on the basis of ratio by weight. In case of slurry removing agent to be solidified, the ratio by weight of the slurry removing agent to the high-polymer-doped solution is preferably set in the aforementioned range when the conversion weight of removing agent in the slurry is assumed as the weight of the removing agent and the total weight of the solvent dispersed in the slurry and the poor solvent in the high-polymer-doped solution is assumed as the weight of the poor solvent.

After mixing the removing agent into the high-polymer-doped solution, the mixture solution, (hereinafter, referred to as "removing-agent mixture") is dried. Depending on the high polymer compound and the solvents used in the high-polymer-doped solution, very hard dried matter is sometimes obtained after drying. In this case, it is preferable that the removing-agent mixture is fed into a mold which can be easily crushed or cut or a mold of a shape of a final product and is then dried. The drying can be conducted at a room temperature or a higher temperature in the range not to deteriorate the removing agent and not to burn the high polymer compound. Therefore, as the drying temperature, a wide range of temperature of 10-150°C may be employed. The drying may be conducted by drying under reduced pressure. The drying time period is suitably determined depending on the removing-agent mixture and the conditions of drying.

The grain diameter of the remover thus produced may be on the order of 0.5-10 mm. The remover obtained by the drying may be suitably pulverized and/or evenly sized if necessary.

Examples of the removing agent to be solidified include removing agents mainly consisting of minerals such as bentonite and montmorillonite, removing agents mainly consisting of metallic ions or metal salts such as calcium and iron, and removing agents mainly consisting of metal hydroxides. These may be used alone or in a mixed state of two or more thereof.

In case of powdery removing agent, there is no specific limitations on particle diameter, but the particle diameter of the powdery removing agent is normally on the order of 01.-500µm. In case of slurry removing agent, the content of water in the slurry is preferably 70% by weight or less. Therefore, it is preferable to perform dehydration before the solidification according to the present invention, if necessary.

Examples of the high polymer compound as a binder include cellulosic high polymer, accetylcellulose and, ethylcellulose, polysulfone, polyacrylonitrile, and polyamide. These may be used alone or in a mixed state of two or more thereof.

Examples of the solvents include ketones such as acetone; amides such as formamide, dimethylformamide, and dimethylacetamide, alcohols such as methanol, ethanol, isopropyl alcohol, and saturated hydrocarbons such as hexane and cyclohexane.

Which solvent is a good solvent or a poor solvent for the high polymer compound depends on the kind of used high polymer compound. Generally, acetone and dimethylformamide are good solvents for high polymer compounds while ethanol and cyclohexane are poor solvents for high polymer compound, but be not limited thereto so that ethanol and cyclohexane may be sometimes selected as the two or more solvents. For making pores by utilizing the phase separation by using a good solvent and a poor solvent for the high polymer compound, water may be selected as the good solvent or the poor solvent for the high polymer compound.

### EXAMPLES

Hereinafter, the present invention will be described specifically with reference to examples. However, these examples are not intended to limit the scope of the present invention.

### Example 1

1 part by weight of ethylcellulose, 5 parts by weight of ethanol, and 5 parts by weight of cyclohexane were mixed to prepare a high-polymer-doped solution. A powdery absorbing agent (mean particle diameter of 10 µm) mainly consisting of calcium hydroxide was used as a removing agent. 5g of the powdery absorbing agent was kneaded with 10g of the high-polymer-doped solution. A mixture thus obtained was dried at 105°C for 24 hours and was then pulverized into grains of 1-2 mm in diameter.

0.5g of solidified granular absorbent thus produced was added to 200 mL of potassium fluoride solution containing 44.8 mg-F/L. Changes in fluoride concentration were measured. The changes with time in fluoride concentration and turbidity (absorbance of 660 nm) after 125 hours are shown in Table 1.

### Comparative Example 1

0.1g of a powdery absorbing agent mainly consisting of calcium hydroxide which was used as a material in Example 1 was added to 200 mL of potassium fluoride solution containing 44.8 mg-F/L in a similar manner of Example 1. Changes in fluoride concentration were measured. The changes with time in fluoride concentration and turbidity (absorbance of 660 nm) after 125 hours are shown in Table 1.

**[Table 1]**

| No. | Fluoride concentration [mg-F/L] | | | Turbidity [-] |
|---|---|---|---|---|
| | after 1 hour | after 24 hours | after 125 | after 125 |
| Comparative Example 1 (powdery absorbing agent) | 30.1 | 27.2 | 27.8 | 0.644 |
| Example 1 (solidified granular absorbent) | 35.8 | 30.1 | 26.8 | 0.167 |

As shown in Table 1, the solidified absorbent of Example 1 has fluoride absorptive capability nearly the same as that of the absorbing agent of Comparative Example 1 and the turbidity after 125 hours of Example 1 was significantly lower than that of Comparative Example 1.

Changes with time in defluorinating amount are shown in Table. 1. It is found that the solidification slackens the increasing curve in defluorinating amount so that the solidification provides delayed effective. That is, the reactivity of chemical absorbent can be controlled by granulation according to the present invention, thereby allowing such a type of usage that the chemical absorbent is put into a column or the like and water to be treated is sequentially flowed to the column so as to absorb and remove target substances.

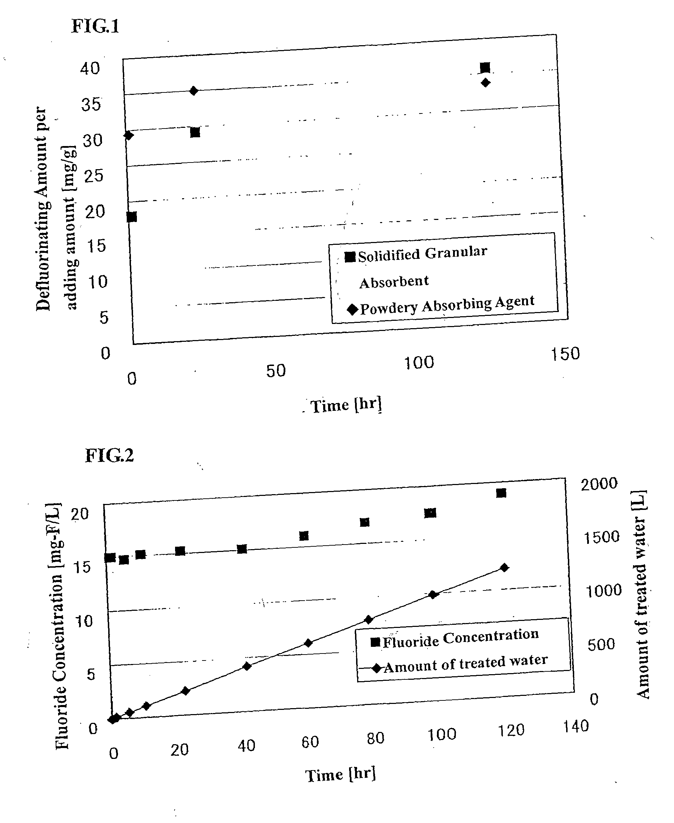

3kg of the solidified granular absorbent obtained in Example 1 was put into a column of 3L. Water containing fluoride having fluoride concentration of 48.9 mg/L was subjected to subsequent defluorinating treatment with the column. Changes with time in fluoride concentration in treated water (water flowing out of the column) and changes with time in amount of treated water are shown in Fig. 2.

From Fig. 2, it is found that it is possible to sequentially treat water containing fluoride, of which amount is 400 times or more of the volume of the column, to absorb and thus remove fluoride such that the fluoride concentration becomes 20 mg/L or less.

On the other hand, in case of using the powdery absorbing agent of Comparative Examples 1 in a column and conducting the same treatment, the column is clogged soon and the sequential test was impossible.

From these results, it is confirmed that the granulation of powdery chemical absorbing agent according to the present invention improves the handling property and enables control of the reactivity.

### Example 2

1 part by weight of accetylcellulose, 10 parts by weight of acetone, and 10 parts by weight of formamide were mixed to prepare a high-polymer-doped solution. A powdery bentonite-series absorbing agent (mean particle diameter of 100 µm) containing rare earth metal as a removing agent was used. 5g of the powdery bentonite-series absorbing agent was kneaded with 5g of the high-polymer-doped solution. A mixture thus obtained was dried at 105°C for one week and was then pulverized into grains of 1-2 mm in diameter.

0.05g of solidified granular absorbent thus produced was added to 200 mL of sample liquid prepared by adding sodium dihydrogen phosphate into city water to have phosphoride concentration of 5.05 mg-P/L. Changes in phosphoride concentration were measured. The phosphoride absorptive capacity per unit weight and turbidity (absorbance of 660 nm) after 24 hours are shown in Table 2.

### Comparative Example 2

0.05g of a powdery bentonite-series absorbing agent which was used as a material in Example 2 was added to 200 mL of sample liquid prepared by adding sodium dihydrogen phosphate into city water to have phosphoride concentration of 5.05 mg-P/L in a similar manner of Example 2. Changes in phosphoride concentration were measured. The phosphoride absorptive capacity per unit weight and turbidity (absorbance of 660 nm) after 24 hours are shown in Table 2.

**[Table 2]**

| No. | Phosphoride absorptive capacity [mg-P/L] | Turbidity [-] |
|---|---|---|
| Comparative Example 2 (powdery absorbing agent) | 7.08 | 0.882 |
| Example 2 (solidified granular absorbent) | 6.29 | 0.017 |

As shown in Table 2, the phosphoride absorptive capability of the absorbing agent of Example 2 which was solidified and granulated is slightly lower than that of Comparative Example 2 while the absorbing agent of Example 2 can reduce the turbidity significantly as compared with Comparative Example 2. That is, the present invention improves sedimentation and solid-liquid separation of powdery physical absorbing agent without severely impairing its absorptive capability and significantly improves its handling property.

### Example 3

1 part by weight of accetylcellulose, 10 parts by weight of acetone, and 10 parts by weight of formamide were mixed to prepare a high-polymer-doped solution. A bentonite-series absorbing slurry containing rare earth metal containing 50% by weight of water as a removing agent was used. 10g of the bentonite-series absorbing slurry was kneaded with 5g of the high-polymer-doped solution. A mixture thus obtained was dried at 105°C for three days and was then pulverized into grains of 1-2 mm in diameter.

0.05g of solidified granular absorbent thus produced was added to 200 mL of sample liquid prepared by adding sodium dihydrogen phosphate into city water to have phosphoride concentration of 2.70 mg-P/L. Changes in phosphoride concentration were measured. The phosphoride absorptive capacity per unit weight and turbidity (absorbance of 660 nm) after 48 hours are shown in Table 3.

### Comparative Example 3

0.1g of a bentonite-series absorbing slurry (0.05g as dry weight of bentonite-series absorbing agent) which was used as a material in Example 3 was added to 200 mL of sample liquid prepared by adding sodium dihydrogen phosphate into city water to have phosphoride concentration of 2.70 mg-P/L. Changes in phosphoride concentration were measured. The phosphoride absorptive capacity per unit weight and turbidity (absorbance of 660,nm) after 48 hours are shown in Table 3.

**[Table 3]**

| No. | Phosphoride absorptive capacity [mg-P/L] | Turbidity [-] |
|---|---|---|
| Comparative Example 3 (powdery absorbing agent) | 5.333 | 0.882 |
| Example 3 (solidified granular absorbent) | 5.07 | 0.436 |

As shown in Table 3, the phosphoride absorptive capability of the absorbing agent of Example 3 which was solidified and granulated is slightly lower than that of Comparative Example 3 while the absorbing agent of Example 3 can reduce the turbidity to about 1/2 of that of Comparative Example 3. That is, the present invention enables solidification of slurry absorbing agent without severely impairing its absorptive capability, thereby providing an absorbent having excellent handling property.

## Claims

1. A method of producing a remover comprising:
a step of mixing a removing agent, a high polymer compound, and two or more kinds of solvents, and
a step of drying a mixture thus obtained.

2. A method of producing a remover as claimed in claim 1, further comprising a step of pulverizing the driedmixture.

3. A method of producing a remover as claimed in claim 2, further comprising a step of evenly sizing grains of the pulverized mixture.

4. A method of producing a remover as claimed in claim 3, wherein the grain diameter of the evenly sized remover is 0.5-10 mm.

5. A method of producing a remover as claimed in claim 1, wherein the high polymer compound is one or more selected from a group consisting of cellulosic high polymer compounds, polysulfones, polyacrylonitriles, and polyamides.

6. A method of producing a remover as claimed in claim 1, wherein the two or more kinds of solvents include a poor solvent and a good solvent for said high polymer compound.

7. A method of producing a remover as claimed in claim 1, wherein the solvents include at least one selected from a group consisting of ketones, amides, alcohols, and saturated hydrocarbons.

8. A method of producing a remover as claimed in claim 7, wherein the solvents include at least one selected from a group consisting of acetone, formamide, dimethylformamide, dimethylacetamide, methanol, ethanol, isopropyl alcohol, hexane, and cyclohexane.

9. A method of producing a remover as claimed in claim 6, wherein the percentage of the good solvent relative to the total of the solvents is preferably 50-90% by weight and the percentage of the high polymer compound relative to the total of the solvents is preferably 1-20% by weight.

10. A method of producing a remover as claimed in claim 1, wherein the ratio of the weight A of the removing agent to the total weight B of the high polymer compound and the solvents, i.e. ratio A/B, is preferably 0.5-2.

11. A method of producing a remover as claimed in claim 1, wherein the removing agent is powdery.

12. A method of producing a remover as claimed in claim 1, wherein the removing agent is slurry.

13. A method of producing a remover as claimed in claim 1, wherein the removing agent mainly consists of a mineral.

14. A method of producing a remover as claimed in claim 13, wherein the mineral is at least one of bentonite and montmorillonite.

15. A method of producing a remover as claimed in claim 14, wherein the mineral is bentonite.

16. A method of producing a remover as claimed in claim 1, wherein the removing agent is at least one of a metal salt and a metal hydroxide.

17. A method of producing a remover as claimed in claim 16, wherein the removing agent is calcium hydroxide.

18. A remover produced by a method as claimed in any one of claims 1 through 17.
